# EUROPEAN PATENT APPLICATION

(11) **EP 4 760 059 A2**
(43) Date of publication of application: **17.06.2026**
(21) Application number: 25222524.8
(22) Date of filing: 11.12.2025
(51) Int. Cl.: F01D 17/14, F01D 25/00, F01D 25/34

(54) **SOLENOID VALVE FOR REDUCING WEAR IN AN ACCESSORY GEARBOX DURING A WASH EVENT OF A GAS TURBINE ENGINE**

(30) Priority: 13.12.2024 IN 202411098634; 19.05.2025 US 202519211419
(71) Applicant: General Electric Company, Cincinnati, Ohio 45215 (US)
(72) Inventor: G., Rajanikanth, 560066 Bengaluru (IN); NAYANI, Manoj, 560066 Bengaluru (IN); PETKAR, Kirti Arvind, 560066 Bengaluru (IN); GANIGER, Ravindra Shankar, 560066 Bengaluru (IN); GRAHAM, Andrew Crispin, Altrincham, WA14 2DT (GB)
(74) Representative: Openshaw & Co.

(57) **Abstract**

A system (200) includes an accessory gearbox (45), a transfer gearbox (46) that is drivingly and fluidly coupled to the accessory gearbox (45), and a lubrication system (100) that is fluidly coupled to the accessory gearbox (45) and the transfer gearbox (46). The lubrication system (100) includes a lubricant reservoir (102) that is fluidly connected to the transfer gearbox (46) and the accessory gearbox (45). A solenoid valve (140) is in fluid communication with the lubricant reservoir (102). The solenoid valve (140) is selectively actuatable upon providing an electrical current (101) from a power source (88, 91) between an open position that allows lubricant (104) to flow from the lubricant reservoir (102) to the accessory gearbox (45) and the transfer gearbox (46) and a closed position that prevents the lubricant (104) to flow from the lubricant reservoir (102) to the accessory gearbox (45) and the transfer gearbox (46).

## Description

### CROSS-REFERENCE TO RELATED APPLIATION(S)

This application claims priority to Indian Provisional Application No. 202411098634 filed December 13, 2024, and to U.S. Utility Application No. 19/211,419 filed May 19, 2025, which are incorporated herein by reference in their entirety.

### FIELD

The present disclosure relates to a system and method for preventing wear in one or more gearboxes of a gas turbine engine during a wash event by introducing lubricant with a solenoid valve.

### BACKGROUND

Typical aircraft propulsion systems include one or more gas turbine engines. For certain propulsion systems, the gas turbine engines generally include a fan and a core arranged in flow communication with one another. Additionally, the core of the gas turbine engine general includes, in serial flow order, a compressor section, a combustor section, a turbine section, and an exhaust section. In operation, air is provided from the fan to an inlet of the compressor section where one or more axial compressors progressively compress the air until it reaches the combustor section. Fuel is mixed with the compressed air and burned within the combustor section to provide combustion gases. The combustion gases are routed from the combustor section to the turbine section. The flow of combustion gasses through the turbine section drives the turbine section and is then routed through the exhaust section, e.g., to atmosphere.

During operation, a substantial amount of air is ingested by such gas turbine engines. However, such air may contain foreign particles. A majority of the foreign particles will follow a gas path through the engine and exit with the exhaust gases. However, at least certain of these particles may stick to certain components within the gas turbine engine's gas path, potentially changing aerodynamic properties of the engine and reducing engine performance.

In order to remove such foreign particles from within the gas path of the gas turbine engine, a cleaning operation can be performed by directing water or other fluids towards an inlet of the gas turbine engine, while the core engine is cranked using, e.g., using a starter motor. However, such cleaning operations are often not tailored to the type of cleaning actually needed in a particular portion of the engine. For example, depending on the prior operating conditions of the gas turbine engine, a quick and simple water wash may be needed. In other situations, a long wash cycle with a wash foam having particular foam characteristics may be needed to properly clean the engine and return it to peak efficiency.

In all the above engine wash situations, the engine is offline for the duration of the wash. As a consequence, the lubricant does not circulate through the various gearboxes of the gas turbine engine. This can result in excessive gear scuffing and wear. Accordingly, an improved lubrication system and method for reducing or preventing wear during a wash of a gas turbine engine is desired and would be beneficial in the art.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 illustrates a cross-sectional view of a gas turbine engine in accordance with an exemplary aspect of the present disclosure.
FIG. 2 is a schematic diagram of a system for reducing or preventing wear during a wash cycle of a gas turbine engine in accordance with embodiments of the present disclosure.
FIGS. 3A and 3B illustrate cross-sectional views of an integrated non-return solenoid valve in two different positions in accordance with embodiments of the present disclosure.
FIGS. 4A, 4B, and 4C illustrate cross-sectional views of an integrated non-return solenoid valve in three different positions in accordance with embodiments of the present disclosure.
FIG. 5 is a flow diagram of a method for reducing or preventing wear during a wash event of a gas turbine engine with a wash system in accordance with embodiments of the present disclosure.
FIG. 6 provides a block diagram of a computing system for implementing one or more aspects of the present disclosure according to example embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

As used herein, the term "line" may refer to fluid conveying component, such as a tube, pipe, hose, or other fluid conveying and/or carrying conduit.

The present disclosure is generally related to a system and method for reducing or preventing wear in one or more gearboxes of a gas turbine engine during a wash event by utilizing a solenoid valve. During the wash of the gas turbine engine, the shafts or spools of the gas turbine engine may be rotated at a slow speed (e.g., 50-150 RPM for several hours) by connecting an electric machine (e.g., a starter motor) to the accessory gearbox and/or the transfer gearbox while cleaning fluid is forced through the gas turbine engine (e.g., through the rotor blades, stator vanes, and various other components). In other embodiments, instead of an electric machine, a hybrid/electric motor such as a hybrid pneumatic electric starter or a hydraulic machine may be connected to the accessory gearbox. Since the engine is offline during wash, lubricant does not circulate as it would during normal operation of the gas turbine engine through the accessory gearbox and the transfer gearbox, which can result in gear scuffing and/or wear during the wash of the engine. For example, during normal operation, one or more supply pumps and one or more return pumps, which are drivingly connected to the accessory gearbox (and/or the transfer gearbox), may circulate lubricant throughout a lubrication system that is fluidly connected to the gearboxes. However, during the wash event, the supply pumps and/or return pumps may be operated at a slower speed than traditional operation, such that lubricant does not circulate at the same rate or in the same amount as it would during normal operation to the accessory gearbox and/or the transfer gearbox. That is, because the gearboxes are driven at a lower speed during the wash event (which can last several hours) to drive the shaft(s) of the gas turbine at a slow speed, thus driving the oil supply/return pumps at a slow speed, wear or gear scuffing can result in the gearboxes due to insufficient lubricant being provided. It will be understood by one skilled in the art that while the term "wash" is often used to describe a wet process involving a liquid or foam washing medium, in the context of the present invention it is intended to encompass all cleaning processes which require rotation of the gas turbine engine during the cleaning process including, without limitation, water wash, foam wash, abrasive media cleaning, dry ice (carbon dioxide) blasting, frozen liquid media cleaning exhibiting a phase change during the wash, laser ablative cleaning and the like.

The improved system and method reduces or prevents gear scuffing and/or wear within the accessory gearbox and the transfer gearbox by providing introducing or providing additional lubricant to a lubrication system via an actuatable solenoid valve during the wash. For example, once the wash system is connected and the wash begins of the gas turbine engine begins, an electrical current may be applied to the solenoid valve to actuate the solenoid valve to an open position, which allows for lubricant to flow from a lubricant reservoir to the various gearboxes during the wash. The electrical current may be supplied from the wash system directly in some embodiments. In other embodiments, the wash system may send a signal to an engine controller that a wash has begun, and the engine controller may instruct a power source associated with the gas turbine engine to provide the electrical current to the solenoid valve. The solenoid valve may allow for additional lubricant to be supplied to the gearboxes during the washing of the gas turbine engine, which advantageously prevents wear and/or scuffing of the gears and other components in the gearboxes during the wash event. The improved lubrication system advantageously reduces the equipment cost because it allows for the gas turbine engine's on-board lubrication system to be utilized for lubricating the gearboxes during the wash event without the need for any additional lubrication systems (e.g., lubrication systems on the wash system or cart or other external oil rig systems). The system also preserves the life of the gearboxes by reducing or preventing wear during the wash event, which can last several hours.

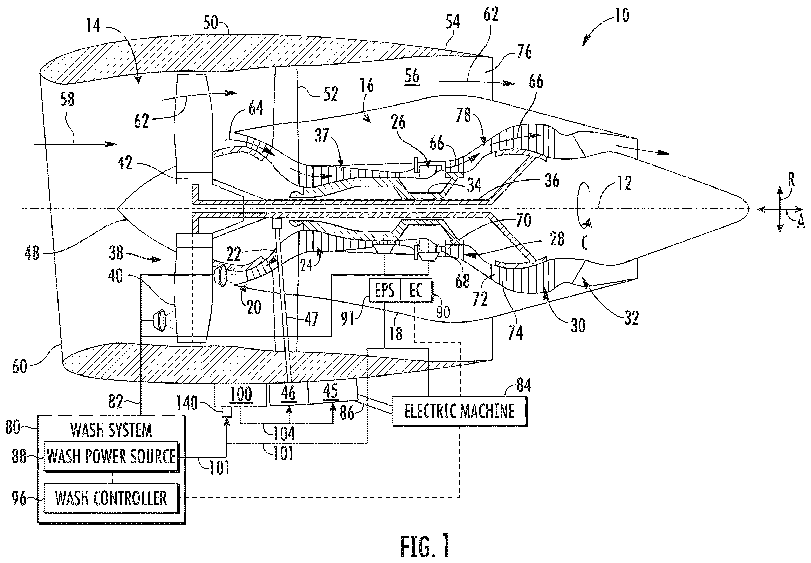

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream from the fan section 14.

The exemplary turbomachine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. The compressor section, combustion section 26, and turbine section together define at least in part a core air flowpath of the turbofan engine 10. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the embodiment depicted, the fan section 14 includes a fan 38 having a plurality of fan blades 40 coupled to a disk 42 in a spaced apart manner. As is depicted, the fan blades 40 extend outwardly from disk 42 generally along the radial direction R. Each fan blade 40 is rotatable relative to the disk 42 about a pitch axis by virtue of the fan blades 40 being operatively coupled to a suitable pitch change mechanism configured to collectively vary the pitch of the fan blades 40, e.g., in unison. The disk 42 is covered by rotatable front hub 48 of the fan section 14 (sometimes also referred to as a "spinner"). The front hub 48 aerodynamically contoured to promote an airflow through the plurality of fan blades 40. The fan blades 40 and disk 42 are together rotatable about the longitudinal centerline 12 by LP shaft 36.

Referring still to the exemplary embodiment of FIG. 1, the exemplary fan section 14 includes an annular fan casing or outer nacelle 50 that circumferentially surrounds the fan 38 and/or at least a portion of the turbomachine 16. The nacelle 50 is supported relative to the turbomachine 16 by a plurality of circumferentially-spaced outlet guide vanes 52. Additionally, a downstream section 54 of the nacelle 50 extends over an outer portion of the turbomachine 16 so as to define a bypass airflow passage 56 therebetween.

During operation of the turbofan engine 10, a volume of air 58 enters the gas turbine engine 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the turbomachine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the gas turbine engine 10, also providing propulsive thrust. The HP turbine 28, the LP turbine 30, and the jet exhaust nozzle section 32 at least partially define a hot gas path 78 for routing the combustion gases 66 through the turbomachine 16.

It should be appreciated, however, that the exemplary turbofan engine 10 depicted in FIG. 1 is by way of example only, and that in other exemplary embodiments, the turbofan engine 10 may have any other suitable configuration. For example, in other exemplary embodiments, the turbofan engine 10 may be configured as a geared turbofan engine (i.e., including a reduction gearbox); may not include variable-pitch fan blades; may include any other suitable number of spools, compressors, or turbines; etc. Additionally, the turbofan engine 10 may instead be configured as any other suitable aeronautical gas turbine engine, such as a turboshaft engine, turboprop engine, turbojet engine, etc. Additionally, still, the turbofan engine 10 may instead be configured as an aeroderivative gas turbine engine (e.g., for nautical applications), an industrial gas turbine engine, or as any other suitable gas turbine engine.

As is depicted, the exemplary turbofan engine 10 further includes an accessory gearbox 45 attached to the gas turbine engine and mechanically coupled to a spool of the gas turbine engine. The accessory gearbox 45 may be mounted outside the flowpaths of the gas turbine engine 10, e.g. coupled to the outer casing of the HP compressor 24, or to the nacelle 50 or any other stationary structure of the gas turbine engine 10. The accessory gearbox may provide power to one or more suitable accessory systems of the gas turbine engine 10 during at least certain operations.

More specifically, the accessory gearbox 45 may be attached to the turbomachine 16 of the turbofan engine 10, and is mechanically coupled to the LP spool 36 of the turbofan engine 10 through a transfer gearbox 46 and transfer shaft 47. The transfer shaft 47 may extend through an outlet guide vane 52. The transfer shaft 47 may be drivingly coupled to the LP shaft 36 and the transfer gearbox 46, such that the LP spool 36 is rotatable with the transfer shaft 47 (e.g., the transfer gearbox 46 and transfer shaft 47 may rotate the LP spool 36). An electric machine 84 (i.e., a starter motor/generator) may be coupled to the accessory gearbox 45 for, e.g., starting the turbofan engine 10 and/or generating electrical power once the turbofan engine 10 is running.

In exemplary embodiments, the gas turbine engine 10 may include a lubrication system 100 fluidly connected to the accessory gearbox 45 and the transfer gearbox 46. The lubrication system 100 may provide lubricant (e.g., oil) the accessory gearbox 45 and the transfer gearbox 46 during operation of the gas turbine engine 10. In this way, the accessory gearbox 45 is drivingly and fluidly coupled to the transfer gearbox 46. The accessory gearbox 45 and the transfer gearbox 46 may be fluidly connected to lubrication system 100.

Moreover, it will be appreciated that after prolonged use of the turbofan engine 10 of FIG. 1, deposits, foreign particles, and other sediments may become attached to or form on certain of the components within the core air flowpath 37 of the turbofan engine 10. Accordingly, it may be beneficial at certain intervals to wash the turbofan engine 10 to remove such deposits, foreign particles, and other sediments. As such, when the gas turbine engine 10 is shut off, a wash system 80 may be utilized and configured for washing, rinsing, or otherwise cleaning the gas turbine engine 10. The wash system 80 may be housed at least in part on or within modular and movable wash cart, which provides mobility of the wash system 80 and facilitates quick and easy cleaning of the gas turbine engine 10. The wash system 80 may include one or more wash line(s) 82, which may expel cleaning fluid into one or more sections and/or onto one or more components of the gas turbine engine 10 during shut down (e.g., the fan blades 40 as shown). For example, as shown in FIG. 1, at least one wash line 82 may provide cleaning fluid onto the fan blades 40; at least one wash line 82 may provide cleaning fluid into the annular inlet 20 of the core flowpath 37; at least one wash line 82 may provide cleaning fluid into (e.g., directly into) the HP compressor 24 (e.g., via one or more borescope holes); and at least one wash line 82 may provide cleaning fluid into (e.g., directly into) the combustion section 26 (e.g., via one or more borescope holes).

For all of the various components of the gas turbine engine 10 to be washed by the washing system 80 during shut down, the gas turbine engine 10 may be rotated by the electric machine 84 while the wash line(s) 82 pump cleaning fluid (e.g., heated detergent) into the engine. The electric machine 84 may be drivingly couplable with the accessory gearbox 45 to rotate the gas turbine engine 10 as desired during cleaning. The electric machine 84 may be capable of driving the accessory gearbox 45, the transfer gearbox 46, the transfer shaft 47, LP spool 36, and/or the HP spool 34. For example, a driving shaft 86 of the electric machine 84 may be couplable with the accessory gearbox 45.

In other embodiments, instead of an electric machine, a hybrid/electric motor such as a hybrid pneumatic electric starter or a hydraulic machine may be couplable with the accessory gearbox. In other embodiments, the gas turbine engine 10 may be rotated without the use of an electric machine during the wash event. For example, an air blower or suction pump may be utilized for driving the gas turbine engine 10. As a result, the gearboxes 45, 46 may also be driven.

As will be appreciated, because the gas turbine engine is offline during cleaning (e.g., foam wash), the lubrication system 100 may not actively circulate lubrication to the accessory gearbox 45 and the transfer gearbox 46 as in traditional operation. For example, during normal operation, one or more supply pumps and one or more return pumps, which are drivingly connected to the accessory gearbox 45 (and/or the transfer gearbox 46), may circulate lubricant throughout the lubrication system 100 that is fluidly connected to the gearboxes 45, 46 (as indicated by arrows in FIG. 1). However, during the wash event, the supply pumps and/or return pumps may be operated at a slower speed than traditional operation, such that lubricant does not circulate at the same rate or in the same amount as it would during normal operation to the accessory gearbox 45 and/or the transfer gearbox 46. That is, because the gearboxes are driven at a lower speed during the wash event (which can last several hours) to drive the shaft(s) of the gas turbine engine 10 at a slow speed, thus driving the oil supply/return pumps at a slow speed, wear or gear scuffing can result in the gearboxes due to insufficient lubricant being provided. However, because the accessory gearbox 45 and the transfer gearbox 46 are driven by the electric machine 84 in order to turn the gas turbine engine during cleaning, this can result in gear scuffing and wear of the various components (e.g., gears, bevel gears, etc.) in the accessory gearbox 45 and/or the transfer gearbox 46.

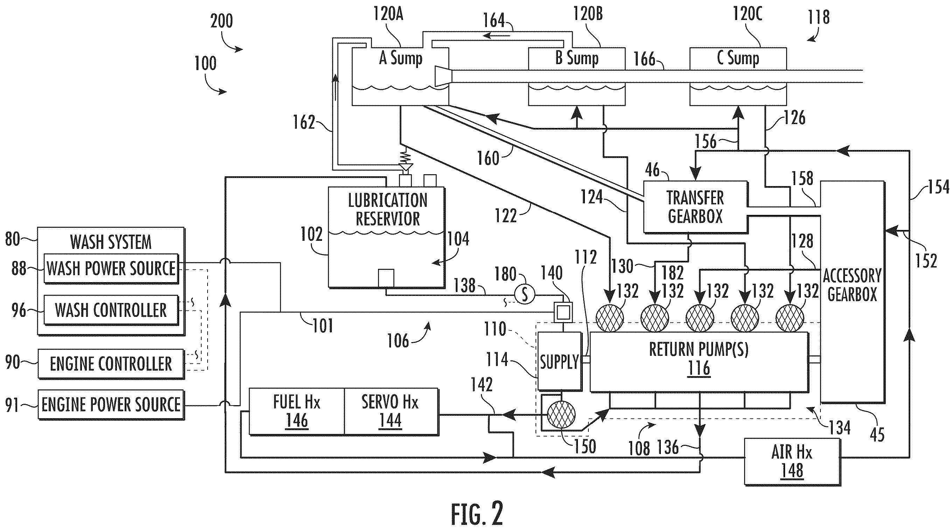

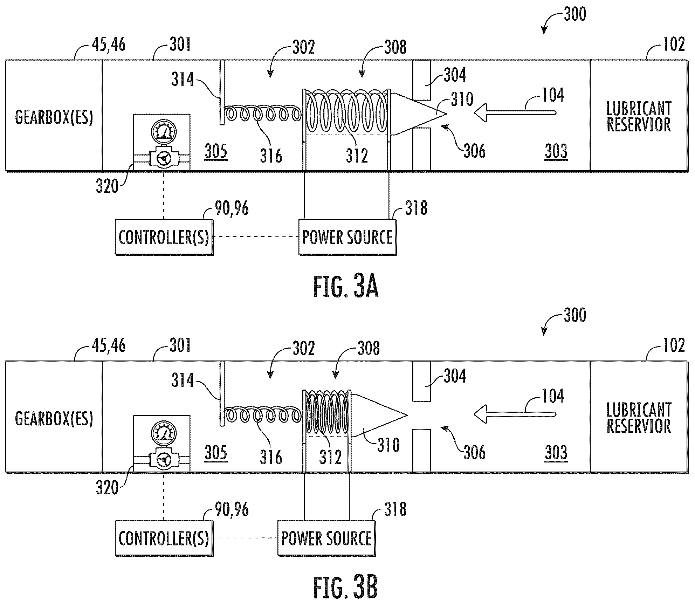

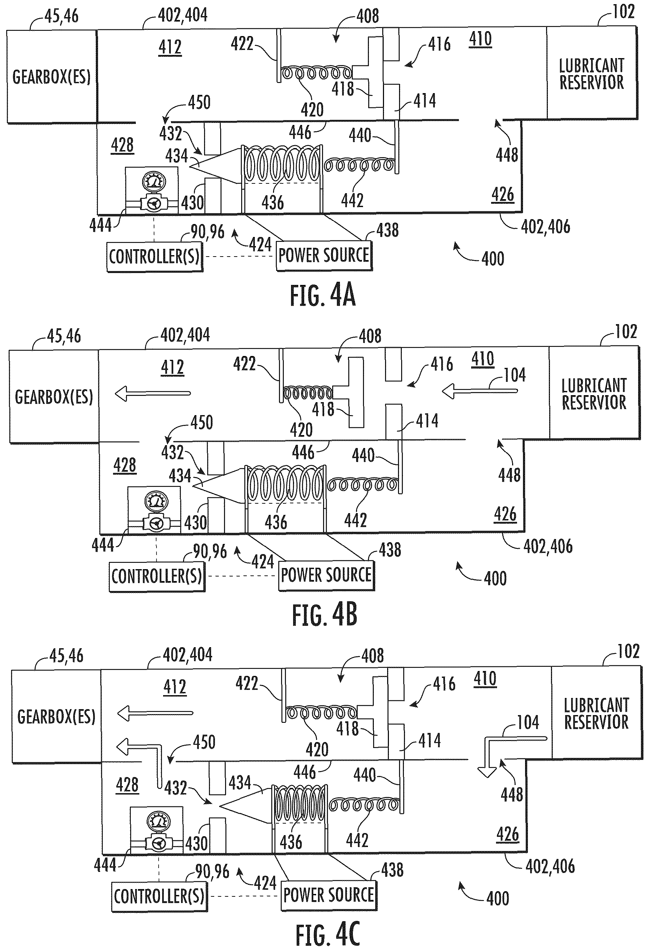

In exemplary embodiments, as discussed below in more detail, the lubrication system 100 may include a solenoid valve 140 in fluid communication with the lubrication system 100. The solenoid valve 140 is selectively actuatable upon receipt (or application) of an electrical current 101 from a power source between an open position that allows lubricant 104 to flow to the accessory gearbox 45 and the transfer gearbox 46 and a closed position that prevents the lubricant 104 from flowing to the accessory gearbox 45 and the transfer gearbox 46. In exemplary embodiments, the solenoid valve 140 may be an integrated non-return solenoid valve (such as the integrated non-return solenoid valve 300 or 400 described below with reference to FIGS. 3A, 3B, 4A, 4B, and 4C). The integrated non-return solenoid valve may be a mechanically loaded one-way valve that prevents lubricant 104 from the lubrication reservoir 102 (FIG. 2) from draining into the lube and scavenge system 110 (FIG. 2) when the gas turbine engine is not operational, the accessory gearbox 45, and/or the transfer gearbox 46. Additionally, integrated non-return solenoid valve may include a solenoid that allows for the integrated non-return solenoid valve to be actuated to an open position during a wash event.

In some embodiments, the gas turbine engine 10 may include an engine power source 91 and an engine controller 90. Similarly, the wash system 80 may include a wash system power source 88 and a wash controller 96. The engine power source 91 may be a battery, a capacitor (such as a super capacitor for energy storage), or another power storage device. The engine power source 88 may be electrically connected to the one or more electrical systems of the gas turbine engine 10, such as the electric machine 84 (e.g., the starter motor/generator) or other electrical systems. The wash system power source 88 may be a battery that is on board the wash system 80 (e.g., on board a mobile wash cart) or other energy storage device in some embodiments.

The wash controller 96 and the engine controller 90 may be in operable communication with one another, such that communication signals may be sent/received between the controllers 90, 96. For example, the wash controller 96 may signal to the engine controller 90 that a wash event has begun, and the engine controller 90 may cause the electric machine 84 to rotate the one or more shafts of the gas turbine engine 10 in response. In exemplary embodiments, the engine power source 91, the engine controller 90, the electric machine 84, the wash controller 96, and the wash power source 88 may be in operable communication with one another. For example, either or both of the controllers 90, 96 may be configured to adjust an operation of the wash power source 88 (e.g., to supply the electrical current 101 to the solenoid valve 140), the engine power source 91 (e.g., to supply the electrical current 101 to the solenoid valve 140), and/or the electric machine 84 (e.g., to rotate the one or more shafts of the gas turbine engine 10 during a wash event).

For example, the wash system power source 88 may be selectively electrically couplable with the solenoid valve 140 to provide the electrical current 101 during the wash event. For example, upon initiation of a wash event of the gas turbine engine 10 using the wash system 80, the wash power source 88 may be connected to the solenoid valve 140, and the electrical current 101 may be supplied thereto, thereby actuating the solenoid valve 140 to an open position and allowing lubricant 104 to flow into the accessory gearbox 45 and the transfer gearbox 46. Upon completion of the wash event, the wash power source 88 may be disconnected from the solenoid valve 140, thereby actuating the solenoid valve 140 to the closed position and preventing lubricant 104 from flowing to the accessory gearbox 45 and the transfer gearbox 46.

Alternatively, or additionally, one or both of the controllers 90, 96 may send a signal to one of the power sources (e.g., the wash power source 88 and/or the engine power source 91) to supply the electrical current 101 during the wash event. For example, upon initiation of a wash event of the gas turbine engine 10 using the wash system 80, the engine controller 90 (and/or the wash controller 96) may instruct the wash power source 88 and/or the engine power source 91 to supply the electrical current 101 to the solenoid valve 140, thereby actuating the solenoid valve 140 to an open position and allowing lubricant 104 to flow into the accessory gearbox 45 and the transfer gearbox 46. Upon completion of the wash event, the engine controller 90 (and/or the wash controller 96) may instruct the wash power source 88 and/or the engine power source 91 to cease supplying the electrical current 101 to the solenoid valve 140, thereby actuating the solenoid valve 140 to the closed position and preventing lubricant 104 from flowing to the accessory gearbox 45 and the transfer gearbox 46.

Referring now to FIG. 2, a schematic diagram of a system 200 for reducing or preventing wear during a wash cycle of a gas turbine engine is provided. The system includes a lubrication system 100 that provides lubricant 104 to the accessory gearbox 45 and/or the transfer gearbox 46 during washing of a gas turbine engine. The lubrication system 100 advantageously provides an improved structure that provides and/or circulates sufficient lubricant to the accessory gearbox 45 and/or the transfer gearbox 46 during the washing of the gas turbine engine (e.g., via the wash system 80 described above with reference to FIG. 1), thereby reducing or preventing scuffing and/or wear of the accessory gearbox 45 and/or the transfer gearbox 46.

As shown, the system 200 includes the accessory gearbox 45 and the transfer gearbox 46, which may be drivingly coupled to the accessory gearbox 45. For example, the transfer gearbox 46 may be drivingly coupled to the accessory gearbox 45 (as shown and described above with reference to FIG. 1). The lubrication system 100 is fluidly coupled to both the accessory gearbox 45 and the transfer gearbox 46, in order to provide lubricant to the accessory gearbox 45 and the transfer gearbox 46 during operation of the gas turbine engine and/or during a wash event of the gas turbine engine.

The lubrication system 100 may include a lubricant reservoir 102, which may be a tank or container that holds and supplies lubricant 104 (e.g., oil) for circulation through the lubrication system 100, the accessory gearbox 45, and the transfer gearbox 46. Additionally, the lubrication system 100 includes a supply circuit 106 and a return circuit 108, which each include one or more fluid carrying conduits that supply and return lubricant 104 to the various components in the lubrication system 100, the accessory gearbox 45, and the transfer gearbox 46. Specifically, the supply circuit 106 may supply and provide lubricant 104 from the lubricant reservoir 102 to the accessory gearbox 45 and the transfer gearbox 46. The return circuit 108 may return lubricant 104 from the accessory gearbox 45 and the transfer gearbox 46 to the lubricant reservoir 102.

In many embodiments, the lubrication system 100 may include a lube and scavenge system 110 fluidly connected to the supply circuit 106 and the return circuit 108. The lube and scavenge system 110 may include a pump shaft 112 drivingly connected to the accessory gearbox 45, such that rotation of the pump shaft 112 rotates the components (e.g., gears and/or accessories) connected to the accessory gearbox 45, thereby also rotating the components of the transfer gearbox 46 via the transfer shaft 47, thereby also rotating the one or more shafts of a gas turbine engine (which is connected to the transfer gearbox 46 as shown and described above with reference to FIG. 1).

The lube and scavenge system 110 may further include a supply pump 114 and one or more return pump(s) 116. The supply pump 112 is fluidly coupled to the supply circuit 106 and drivingly coupled to the pump shaft 112. The supply pump 114 may motivate lubricant 104 to circulate through the lubrication system 100 (specifically through the supply circuit 106). The one or more return pump(s) 116 may each be fluidly coupled to the return circuit 108 and drivingly coupled to the pump shaft 112. The one or more return pump(s) 116 may motivate lubricant 104 to circulate through the lubrication system 100 (specifically through the return circuit 108). The pump shaft 112 may drivingly couple both the supply pump 114 and the one or more return pump(s) 116.

In various embodiments, the lubrication system 100 may further include a sump system 118 a sump system having one or more sumps 120A, 120B, 120C fluidly connected to at least one of the supply circuit 106 and the return circuit 108. The sump system 118 can be a bearing sump region for lubricating engine bearings, in one non-limiting example. A first sump 120A, a second sump 120B, and a third sump 120C can be included in the sump system 118. Each sump 120A, 120B, 120C may be a reservoir or container that collects used lubricant 104 (e.g., used oil) from one or more engine bearings of a gas turbine engine (such as the gas turbine engine 10 described above with reference to FIG. 10). In other words, each sump 120A, 120B, 120C may be fluidly connected to an engine bearing of a gas turbine engine. While three sumps are illustrated, any number of sumps is contemplated. In one example, a valve can control provision of lubricant 104 to any one of the sumps.

The return circuit 108 may include one or more return lines 122, 124, 126, 128, 130 extending to the lube and scavenge system 110 and a main return line extending from the lube and scavenge system 110 to the lubrication reservoir 102. Specifically, a first sump return line 122 may extend from the first sump 120A to the lube and scavenge system 110 (e.g., to the one or more return pump(s) 116 of the lube and scavenge system 110) to provide used lubricant from the first sump 120A to the lube and scavenge system 110. A second sump return line 124 may extend from the second sump 120B to the lube and scavenge system 110 (e.g., to the one or more return pump(s) 116 of the lube and scavenge system 110) to provide used lubricant from the second sump 120B to the lube and scavenge system 110. A third sump return line 126 may extend from the third sump 120C to the lube and scavenge system 110 (e.g., to the one or more return pump(s) 116 of the lube and scavenge system 110) to provide used lubricant from the third sump 120C to the lube and scavenge system 110.

Additionally, an accessory gearbox return line 128 may extend from the accessory gearbox 45 to the lube and scavenge system 110 (e.g., to the one or more return pump(s) 116 of the lube and scavenge system 110) to provide used lubricant from the accessory gearbox 45 to the lube and scavenge system 110. Similarly, a transfer gearbox return line 130 may extend from the transfer gearbox 46 to the lube and scavenge system 110 (e.g., to the one or more return pump(s) 116 of the lube and scavenge system 110) to provide used lubricant from the transfer gearbox 46 to the lube and scavenge system 110.

In various embodiments, an inlet filter 132 may be disposed in fluid communication on each of the one or more return lines 122, 124, 126, 128, 130 immediately upstream of the one or more return pump(s) 116. The inlet filters 132 may filter the used lubricant within each of the one or more return lines 122, 124, 126, 128, 130 prior to entrance into the one or more return pump(s) 116. For example, the inlet filters 132 may remove contaminants and/or particles from the used lubricant flowing through the one or more return lines 122, 124, 126, 128, 130 that could otherwise cause damage to the components of the system 100.

In exemplary embodiments, the lube and scavenge system 110 may include a scavenge manifold 134 fluidly coupled, and extending from, the one or more return pump(s) 116. The scavenge manifold 134 may collect all the lubricant from each pump of the one or more return pump(s) 116. The return circuit 108 may further include a main return line 136 extending from the lube and scavenge system 110 to the oil reservoir 102. Specifically, the main return line 136 may extend from the scavenge manifold 134 to the lubricant reservoir 102 (e.g., to a top of the lubricant reservoir).

The supply circuit 106 may provide clean (e.g., filtered) lubricant to the lube and scavenge system 110, the accessory gearbox 45, and the transfer gearbox 46. The supply circuit 106 may include an inlet supply line 138 fluidly coupling the lubrication reservoir 102 and the lube and scavenge system 110. Specifically, the inlet supply line may extend from the lubrication reservoir 102 to the lube and scavenge system 110. Specifically, the inlet supply line may extend from the lubrication reservoir 102 to the supply pump 114 of the lube and scavenge system 110.

The supply circuit 106 may further include an outlet supply line 142 extending from the lube and scavenge system 110 to the accessory gearbox 45 and the transfer gearbox 46. Specifically, the outlet supply line 142 may extend from the supply pump 114 to the accessory gearbox 45 and the transfer gearbox 46.

In many embodiments, the system 100 may further include one or more heat exchangers 144, 146, 148 disposed in thermal communication on the outlet supply line 142. Specifically, the one or more heat exchangers may include a servo heat exchanger 144, a fuel heat exchanger 146, and an air heat exchanger 148. During normal operation of a gas turbine engine, the servo heat exchanger 144 may transfer heat between the lubricant 104 within the outlet supply line 142 and one or more servo motors associated with the system 100 and/or the gas turbine engine (such as the gas turbine engine 10 described above with reference to FIG. 1). Additionally, during normal operation of a gas turbine engine, the fuel heat exchanger 146 may transfer heat between the lubricant 104 within the outlet supply line 142 and fuel supplied to the gas turbine engine, e.g., from a fuel supply system coupled to a combustion section of the gas turbine engine (such as the gas turbine engine 10 described above with reference to FIG. 1). Further, during normal operation of a gas turbine engine, the air heat exchanger 148 may transfer heat between the lubricant 104 within the outlet supply line 142 and air supplied to the gas turbine engine, e.g., air from the fan section and/or the compressor section of the gas turbine engine (such as the gas turbine engine 10 described above with reference to FIG. 1).

In some embodiments, a supply-side filter 150 may be disposed in fluid communication on the outlet supply line 142. The supply side filter 150 may be disposed immediately downstream of the supply pump 114. The supply-side filter 150 may remove contaminants and/or particles from the lubricant being supplied to the accessory gearbox 45 and/or the transfer gearbox 46 via the outlet supply line. As illustrated, a filter bypass line may be included on the outlet supply line 142, which allows for selective bypass of the supply-side filter.

The lubrication system 100 may further include a vent circuit for venting gases (e.g., air and/or other gases) from the lubricant system 100 (e.g., to the atmosphere). The vent circuit may include an accessory duct 158 extending from the accessory gearbox 45 to the transfer gearbox 46 for venting excess gases from the accessory gearbox 45. A transfer duct 160 may extend from the transfer gearbox to the sump system 118 (e.g., to the first sump 120A in the sump system 118) for venting or removing excess gases from the transfer gearbox 46. A reservoir vent 162 may extend from the lubrication reservoir 102 to the first sump 120A for venting or removing excess gases from the lubrication reservoir 102. An overflow duct 164 may extend from the second sump 120B to the first sump 120A for venting excess gases from the second sump 120B to the first sump 120A. A main duct 166 may extend from the first sump 120A, through the second sump 120B and the third sump 120C, to an outlet, which may exhaust the gases (e.g., to the atmosphere). The main duct 166 may be positioned within the LP shaft of a gas turbine engine (such as the LP shaft 36 described above with reference to FIG. 1).

In many embodiments, the outlet supply line 142 may include a first branch 152 extending to the accessory gearbox 45 and a second branch 154 extending to the transfer gearbox 46. Additionally, the outlet supply line 142 may include an overflow branch 156 that connects to each sump 120A, 120B, 120C in the sump system 118 to prevent lubricant overfill of the accessory gearbox 45 and/or the transfer gearbox 46. The overflow branch 156 may extend from the second branch 154 to each of the sumps 120A, 120B, 120C.

In exemplary embodiments, still referring to FIG. 2, the system 200 may further include a wash system 80, which may be utilized and configured for washing, rinsing, or otherwise cleaning a gas turbine engine (such as the gas turbine engine described above with reference to FIG. 1). The wash system 80 may be housed at least in part on or within modular and movable wash cart, which provides mobility of the wash system 80 and facilitates quick and easy cleaning of the gas turbine engine. The wash system 80 may include one or more wash line(s), which may expel cleaning fluid onto one or more components of the gas turbine engine during shut down.

As will be appreciated, because the gas turbine engine is offline during cleaning (e.g., foam wash), the lubrication system 100 may not actively circulate lubrication from the lubrication reservoir 102 to the accessory gear box 45 and the transfer gearbox 46 as in traditional operation. However, because the accessory gear box 45 and the transfer gearbox 46 are driven (e.g., by an electric machine or by another means such as an electric starter, hybrid/electric starter, hybrid pneumatic/electric starter) in order to turn the gas turbine engine during cleaning, this can result in gear scuffing and wear of the various components (e.g., gears, bevel gears, etc.) in the accessory gearbox 45 and/or the transfer gearbox 46.

In exemplary embodiments, the lubrication system 100 may include a solenoid valve 140 in fluid communication with the lubrication reservoir 102 of the lubrication system 100. The solenoid valve 140 is selectively actuatable upon providing an electrical current 101 (FIG. 1) from a power source between an open position that allows lubricant 104 to flow from the lubrication reservoir 102 to the accessory gearbox 45 and the transfer gearbox 46 and a closed position that prevents the lubricant 104 from flowing to the accessory gearbox 45 and the transfer gearbox 46 from the lubrication reservoir 102.

In many embodiments, as shown, the solenoid valve 140 may be disposed in fluid communication on the supply circuit 106. Specifically, the solenoid valve 140 may be disposed in fluid communication on the on the inlet supply line 138 of the supply circuit 106 between the lubrication reservoir 102 and the lube and scavenge system 110. All lubricant 104 from the lubrication reservoir may flow through the inlet supply line 138 and through the solenoid valve 140 (when in an open position). The solenoid valve 140 may be integral with the lube and scavenge system 110 in some embodiments, e.g., connected or integral to a housing of the lube and scavenge system 110.

In many embodiments, the system 200 may include an engine power source 91 and an engine controller 90, which may be associated with a gas turbine engine (such as the gas turbine engine 10 described above with reference to FIG. 1). Similarly, the wash system 80 may include a wash system power source 88 and a wash controller 96. The engine power source 91 may be a battery, a capacitor (such as a super capacitor for energy storage), or another power storage device. The engine power source 88 may be electrically connected to the one or more electrical systems of the gas turbine engine 10, such as the electric machine 84 (e.g., the starter motor/generator) or other electrical systems. The wash system power source 88 may be a battery that is on board the wash system 80 (e.g., on board a mobile wash cart) or other energy storage device in some embodiments. In some embodiments, the electrical current 101 may be received by the solenoid valve 140 from the wash power source 88. In other embodiments, the electrical current 101 may be received by the solenoid valve 140 from the engine power source 91.

In exemplary embodiments, the wash event of a gas turbine engine may be performed using the wash system 80. As described below, both the wash controller 96 and the engine controller 90 may include a memory and one or more processors. the memory stores instructions that when executed by the one or more processors cause the system 200 to perform operations. The operations may include receiving, with the engine controller, a signal indicative that the wash event has started (e.g., from the wash controller 96). In response, the engine controller 90 and/or the wash controller 96 may provide the electrical current 101 from one of the was power source 88 and/or the engine power source 91 to actuate the solenoid valve 140 an open position that allows lubricant 104 to flow from the lubrication reservoir 102 to the accessory gearbox 45 and the transfer gearbox 46.

In many embodiments, the system 200 may further include a flow meter 180 (or flow sensor) in fluid communication with the lubrication system 100. In some embodiments, the flow meter 180 may be disposed in fluid communication on the supply circuit 106. Specifically, the flow meter 180 may be disposed in fluid communication on the on the inlet supply line 138 of the supply circuit 106 between the lubrication reservoir 102 and the solenoid valve 140. All lubricant 104 from the lubrication reservoir 102 may flow through the flow meter 180. The flow meter 180 may measure and monitor a quantity of fluid (e.g., lubricant) passing through the inlet supply line 138 and the solenoid valve 140, thereby monitoring the amount of lubricant being provided to the accessory gearbox 45 and the transfer gearbox 46. The flow meter 180 may be monitored by the controller(s) 90, 96 to prevent overfilling of lubricant to the accessory gearbox 45 and the transfer gearbox 46 during the wash event of a gas turbine engine. For example, the flow meter 180 may be in operable communication with the controller(s) 90, 96, such that the controller(s) 90, 96 may receiving data indicative of an amount of lubricant 104 supplied to the accessory gearbox 45 and the transfer gearbox 46 from the flow meter 180.

In many embodiments, the controller(s) 90, 96 may determine, based on the data indicative of the amount of lubricant supplied, that the data indicative of the amount of lubricant supplied to the accessory gearbox and the transfer gearbox has exceeded a predetermined threshold. The predetermined threshold may be a lubricant limit of the accessory gearbox 45 and/or the transfer gearbox 46 (e.g., the maximum amount of lubricant the accessory gearbox 45 and/or the transfer gearbox 46 can hold without being overfilled). In some embodiments, the predetermined threshold may be within about ±20% (or such as about ±10%) of the lubricant limit of the accessory gearbox 45 and/or the transfer gearbox 46. In various embodiments, the controller(s) 90, 96 may actuate the solenoid valve 140 to the closed position by ceasing the electrical current 101 from the power source(s) 88, 91 in response to determining that the data indicative of the amount of lubricant supplied to the accessory gearbox 45 and the transfer gearbox 46 has exceeded the predetermined threshold. In this way, the flow meter 180 may advantageously be utilized as described above to prevent the accessory gearbox 45 and/or the transfer gearbox 46 from being overfilled with lubricant 104 during a wash event. In embodiments where the lubrication reservoir 102 does not contain enough lubricant to sufficient to be supplied to the gearboxes 45, 46 over the entire wash period (e.g., the lubrication reservoir runs out of lubricant during the wash period), an external lubricant reservoir may be connected to the lubrication reservoir 102 for supplying additional lubricant.

In other embodiments, the controllers 90, 96 may determine, after or during a predetermined period, that an insufficient amount of lubricant is (or has been) transferred to the accessory gearbox 45 and the transfer gearbox 46 based on the data indicative of the amount of lubricant supplied to the accessory gearbox and the transfer gearbox. In response, the controllers 90, 96 may stop the wash event and/or cease rotating the one or more gearboxes 45, 46 to prevent wear or gear scuffing. For example, when the controllers 90, 96 determine (by monitoring the flow meter 180) that insufficient lubricant is being (or has been) transferred to the gearboxes 45, 46, the controllers 90, 96 may cease the wash event and/or cease rotating the gearboxes 45, 46.

Referring now to FIGS. 3A and 3B, two cross-sectional views of an integrated non-return solenoid valve 300 are illustrated in accordance with embodiments of the present disclosure. Specifically, FIG. 3A illustrates the integrated non-return solenoid valve 300 in a closed position, and FIG. 3B illustrates the integrated non-return solenoid valve 300 in an open position. The integrated non-return solenoid valve 300 shown in FIGS. 3A and 3B may be implemented as the solenoid valve 140 shown and described above with reference to FIG. 2. That is, in some embodiments, the solenoid valve 140 described above with reference to FIG. 2 may be the integrated non-return solenoid valve 300 shown in FIGS. 3A and 3B and described below.

The integrated non-return solenoid valve 300 may be a mechanically loaded one-way valve that prevents lubricant 104 from a lubrication reservoir 102 from draining into the accessory gearbox 45 and the transfer gearbox 46 when the gas turbine engine is not operational. Additionally, as described below, the integrated non-return solenoid valve 300 may include a solenoid that allows for the integrated non-return solenoid valve 300 to be actuated to an open position, e.g., during a wash event.

The integrated non-return solenoid valve 300 may include a valve body 301 that defines a passage 302. A blocking wall 304 may extend into the passage 302 and define an aperture 306. The blocking wall 304 may partition the passage 302 into an inlet zone 303 and an outlet zone 305. A solenoid assembly 308 may be positioned within the passage 302. The solenoid assembly 308 may include a solenoid piston 310 and a solenoid 312 connected to the solenoid piston 310. In various embodiments, the solenoid piston 310 may be shaped as a cone extending from the solenoid 312 at a base to a tip. In some embodiments, the solenoid 312 may be connected to the valve body 301, e.g., via a back wall 314 extending from the valve body 301 into the passage 302. In various embodiments, the solenoid assembly 308 may further include a mechanical spring 316 extending between, and coupled to, the solenoid 310 and the back wall 314.

In the closed position, as shown in FIG. 3A, the solenoid piston 310 may extend into the aperture 306 and fluidly isolate the inlet zone 303 and the outlet zone 305, thereby preventing lubricant 104 from flowing from the lubricant reservoir 102 to the gearboxes 45, 46. In the open position, one of the mechanical spring 316 and/or the solenoid 312 may compress. As a result, the solenoid piston 310 may be spaced apart from the aperture 306 to allow lubricant 104 to flow through the aperture 306 from the inlet zone 303 to the outlet zone 305, thereby allowing lubricant 104 to flow from the lubricant reservoir 102 to the gearboxes 45, 46.

The solenoid 312 is illustrated in a simplified form in FIGS. 3A and 3B for the sake of discussion. As should be appreciated, the solenoid 312 may include a coil (wire) wrapped around a core, an armature, and a spring that biases the armature away from the core. When electrical current is applied to the coil, the core generates a magnetic field that attracts the armature toward the core, which compresses the spring. When power is ceased, the magnetic field is gone, and the spring biases the armature away from the core. As such, as used herein, the phrases "the solenoid compresses" may mean that, when an electrical current is applied to a coil of the solenoid, the core generates a magnetic field that attracts the armature toward the core, which compresses the spring of the solenoid, thereby moving the solenoid piston 310 away from the aperture 306.

The integrated non-return solenoid valve 300 may be moved into the open position in two ways depending on a mode of operation of a gas turbine engine. During normal operation of a gas turbine engine (e.g., cruise, climb, steady state operating conditions, etc.), a pressure of lubricant 104 within the inlet zone 303 may exceed a spring force of the mechanical spring 316, which compresses the mechanical spring 316 and allows for lubricant 104 to flow through the aperture 306. During a wash event, the pressure of the lubricant 104 within the inlet zone 303 does not exceed the spring force of the mechanical spring 316, and as such, the integrated non-return solenoid valve 300 may be actuated (e.g., by controller(s) 90, 96) to an open position by applying (or providing) an electrical current from a power source 318 to the solenoid 312. The power source 318 may be electrically connected to the solenoid 312, e.g., via one or more wires.

The integrated non-return solenoid valve 300 may further include a flow meter 320 disposed in the passage 302, e.g., in the outlet zone 305 of the passage 302. The flow meter 320 may be operably connected to the controller(s) 90, 96 for monitoring the amount of lubricant 104 passing from the lubricant reservoir 102 and the gearboxes 45, 46, as described in detail above.

Referring now to FIGS. 4A, 4B, and 4C, three cross-sectional views of an integrated non-return solenoid valve 400 are illustrated in accordance with embodiments of the present disclosure. Specifically, FIG. 4A illustrates the integrated non-return solenoid valve 400 in a fully closed position, FIG. 4B illustrates the integrated non-return solenoid valve 400 in a non-return open position, and FIG. 4C illustrates the integrated non-return solenoid valve 400 in a solenoid open position.

The integrated non-return solenoid valve 400 may include both a mechanically loaded one-way valve that prevents lubricant 104 from a lubrication reservoir 102 from draining into the accessory gearbox 45 and the transfer gearbox 46 when the gas turbine engine is not operational. Additionally, as described below, the integrated non-return solenoid valve 400 may include a solenoid valve that allows for the integrated non-return solenoid valve 400 to be actuated to an open position, e.g., during a wash event.

The integrated non-return solenoid valve 400 may include a common valve body 402 having a non-return valve 404 and a solenoid valve 406. The common valve body 402 of the non-return valve 404 defines a primary passage 408 partitioned into a primary inlet zone 410 and a primary outlet zone 412 by a primary blocking wall 414. The primary blocking wall 414 may extend into the primary passage 408 and define a primary aperture 416. The non-return valve 404 further includes a non-return piston 418 that is mechanically loaded against the blocking wall 414 (e.g., via a mechanical spring 420) in a non-return closed position (FIG. 4A) and is movable to a non-return open position (FIG. 4B) when a pressure within the primary inlet zone exceeds a mechanical spring force of the mechanical spring 420. A primary back wall 422 may extend from the common valve body 402, and the mechanical spring 420 extends between the primary back wall 422 and the non-return piston 418. The mechanical spring 420 extends between, and couples to, the non-return piston 418 and the primary back wall 422.

The common valve body 402 of the solenoid valve 406 defines a bypass passage 424 that is partitioned into a bypass inlet zone 426 and a bypass outlet zone 428 by a bypass blocking wall 430. The bypass blocking wall 430 may extend into the bypass passage 424 and define a bypass aperture 432. The solenoid valve 406 includes a solenoid piston 434 that is loaded against the bypass blocking wall 430 with a solenoid 436 in a solenoid closed position (FIG. 4A and 4B). The solenoid valve 406 is selectively actuatable to a solenoid open position (FIG. 4C) upon receipt of an electrical current from a power source 438.

The solenoid 436 and the solenoid piston 434 may be positioned within the bypass passage 424. In various embodiments, the solenoid piston 434 may be shaped as a cone extending from the solenoid 436 at a base to a tip. In some embodiments, the solenoid 436 may be connected to the common valve body 402, e.g., via a back wall 440 extending from the common valve body 402 into the passage 302. In various embodiments, a mechanical spring 442 may extend between, and coupled to, the solenoid 436 and the bypass back wall 440.

In the solenoid closed position, as shown in FIGS. 4A and 4B, the solenoid piston 434 may extend into the bypass aperture 432 and fluidly isolate the bypass inlet zone 426 and the bypass outlet zone 428, thereby preventing lubricant 104 from flowing from the lubricant reservoir 102 to the gearboxes 45, 46. In the solenoid open position (FIG. 4C), the solenoid 312 may compress. As a result, the solenoid piston 434 may be spaced apart from the bypass aperture 432 to allow lubricant 104 to flow through the bypass aperture 432 from the bypass inlet zone 426 to the bypass outlet zone 428, thereby allowing lubricant 104 to flow from the lubricant reservoir 102 to the gearboxes 45, 46.

The integrated non-return solenoid valve 400 may be moved into an open position several ways depending on a mode of operation of a gas turbine engine. During normal operation of a gas turbine engine (e.g., cruise, climb, steady state operating conditions, etc.), a pressure of lubricant 104 within the inlet zone 410 may exceed a spring force of the mechanical spring 420, which compresses the mechanical spring420 and allows for lubricant 104 to flow. During a wash event, the pressure of the lubricant 104 within the inlet zone 410 does not exceed the spring force of the mechanical spring 420, and as such, the integrated non-return solenoid valve 400 may be actuated (e.g., by controller(s) 90, 96) to an open position by applying an electrical current from a power source 438 to the solenoid 436. The power source 438 may be electrically connected to the solenoid 436, e.g., via one or more wires.

The solenoid piston 434 and the non-return piston may be oppositely loaded against the respective blocking walls 414, 430. For example, the solenoid piston 434 is loaded against the bypass blocking wall 330 in the flow direction of the lubricant, and the non-return piston 418 is loaded against the primary blocking wall 414 in the flow direction of the lubricant. As such, during normal operation of the gas turbine engine, a pressure of lubricant 104 within the inlet zone 426 may force the solenoid piston 434 against the bypass blocking wall 430, thereby preventing flow through the bypass passage 424. By contrast, during normal operation, a pressure of lubricant 104 within the inlet zone 410 may exceed a spring force of the mechanical spring 420, which compresses the mechanical spring 420 and allows for lubricant 104 to flow. The integrated non-return solenoid valve 400 may further include a flow meter 444. The flow meter 444 may be disposed in the bypass outlet zone 428. The flow meter 444 may be operably connected to the controller(s) 90, 96 for monitoring the amount of lubricant 104 passing from the lubricant reservoir 102 and the gearboxes 45, 46, as described in detail above.

In many embodiments, the common valve body 402 may include a divider wall 446 that partitions the primary passage 408 and the bypass passage 424. As shown, the bypass inlet zone 426 is fluidly coupled to the primary inlet zone 410 via a first bypass aperture 448 defined in the divider wall 446, and the bypass outlet zone 428 is fluidly coupled to the primary outlet zone 412 via a second bypass aperture 450 defined in the divider wall 446.

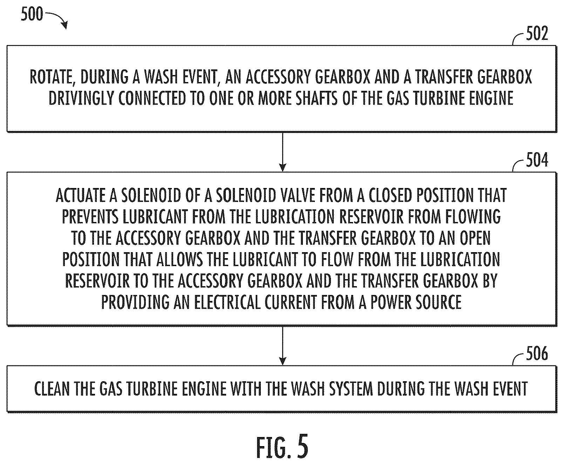

Referring now to FIG. 5, a flow diagram of a method 500 for preventing wear (e.g., in one or more gearboxes) during a wash event of a gas turbine engine with a wash system is illustrated in accordance with embodiments of the present subject matter. In general, the method 500 will be described herein with reference to the gas turbine engine 10, the wash system 80, the system 200, the lubrication system 100, and integrated non-return solenoid valves 300, 400 described above with reference to FIGS. 1 through 4. However, it will be appreciated by those of ordinary skill in the art that the disclosed method 500 may generally be utilized with any other suitable system configuration. In addition, although FIG. 5 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure.

As shown, the method 500 may include, at (502), rotating, during the wash event, the accessory gearbox and the transfer gearbox are drivingly connected to one or more shafts of the gas turbine engine (e.g., with an electric machine). Alternatively, or additionally, an electric starter, hybrid/electric starter, hybrid pneumatic/electric starter, or other means may be utilized for rotating the gearboxes, thereby rotating the one or more shafts of the gas turbine engine during the wash. In various implementations, the wash event may be between about 0.5 hour and about 5 hours (or such as between about 0.5 hour and about 3 hours). The accessory gearbox and the transfer gearbox are fluidly connected to a supply circuit of a lubrication system. For example, during the wash of the gas turbine engine, the accessory gearbox and the transfer gearbox may be driven with an electric machine, thereby rotating one or more shafts of the gas turbine engine (e.g., the LP shaft and/or the HP shaft). In many embodiments, rotating at (502) may include rotating, over the wash event, the one or more shafts of the gas turbine engine at between about 10 revolutions per minute (RPM) and about 400 RPM (or such as between about 50 RPM and about 200 RPM, or such as between about 100 RPM and about 150 RPM) for the duration of the wash event with the electric machine drivingly connected to an accessory gearbox and a transfer gearbox or by another means such as an electric starter, hybrid/electric starter, hybrid pneumatic/electric starter. As a result, components (e.g., gears) of the accessory gearbox and the transfer gearbox rotate along with the one or more shafts.

In exemplary implementations, the method 500 may further include, at (504), actuating a solenoid of a solenoid valve from a closed position that prevents lubricant from the lubrication reservoir from flowing to the accessory gearbox and the transfer gearbox to an open position that allows the lubricant to flow from the lubrication reservoir to the accessory gearbox and the transfer gearbox by providing an electrical current from a power source.

In various embodiments, the wash system may include a wash controller, and the gas turbine engine includes an engine controller in operable communication with the wash controller and the engine controller. In such embodiments, the method may further include receiving, with the engine controller, a signal indicative that the wash event has started. In response, the electrical current may be provided from an engine power source to the solenoid valve in response to receiving the signal indicative that the wash event has started, thereby opening the solenoid to an open position and allowing lubricant to flow. Additionally, in such embodiments, the method may further include receiving, with the engine controller, data indicative of an amount of lubricant supplied to the accessory gearbox and the transfer gearbox from a flow meter in fluid communication with the lubrication system. The engine controller may then determine that the data indicative of the amount of lubricant supplied to the accessory gearbox and the transfer gearbox has exceeded a predetermined threshold (e.g., indicating that the gearboxes are being overfilled). In response, the method may include actuating the solenoid valve to the closed position by ceasing the electrical current from the power supply.

In many implementations, the method may include receiving, with the engine controller, data indicative of an amount of lubricant supplied to the accessory gearbox and the transfer gearbox from a flow meter in fluid communication with the lubrication system. In such implementations, the method may further include determining, after or during a predetermined period, that insufficient lubricant is transferred to the accessory gearbox and the transfer gearbox based on the data indicative of the amount of lubricant supplied to the accessory gearbox and the transfer gearbox. In response, the method may include ceasing rotating the accessory gearbox and the transfer gearbox to protect the gearboxes from scuffing and/or gear wear.

In exemplary embodiments, the method 500 may further include, at (506), cleaning the gas turbine engine with the wash system during the wash period. The wash system may include one or more wash line(s), which may expel cleaning fluid onto one or more components of the gas turbine engine while the shaft(s) of the gas turbine engine are rotated by the electric machine. In many embodiments, cleaning at (506) may include expelling cleaning fluid onto one or more components of the gas turbine engine while the shaft of the gas turbine engine is rotated by the electric machine and the solenoid is in the open position.

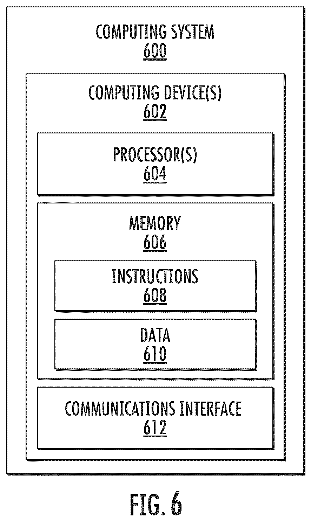

FIG. 6 provides a block diagram of an example computing system 600. The computing system 600 can be used to implement the aspects disclosed herein. The computing system 600 can include one or more computing device(s) 602. Controllers 90, 96 described above with reference to FIGS. 1-4 may be constructed and may operate in a same or similar manner as one of the computing devices 602, for example.

As shown in FIG. 6, the one or more computing device(s) 602 can each include one or more processor(s) 604 and one or more memory device(s) 606. The one or more processor(s) 604 can include any suitable processing device, such as a microprocessor, microcontroller, integrated circuit, logic device, or other suitable processing device. The one or more memory device(s) 606 can include one or more computer-readable media, including, but not limited to, non-transitory computer-readable medium or media, RAM, ROM, hard drives, flash drives, and other memory devices, such as one or more buffer devices.

The one or more memory device(s) 606 can store information accessible by the one or more processor(s) 604, including computer-readable or computer-executable instructions 608 that can be executed by the one or more processor(s) 604. The instructions 608 can be any set of instructions or control logic that when executed by the one or more processor(s) 604, cause the one or more processor(s) 604 to perform operations. The instructions 608 can be software written in any suitable programming language or can be implemented in hardware. The computing system 600 may implement controllers 90, 96 described above with reference to FIGS. 1-4, such that the instructions 608 may be executed to implement the method 500 or one or more parts of the method 500 described above with reference to FIG. 5. For example, the instructions 608 may be executed by the one or more processor(s) 604 of the computing system 600 for to cause the system to perform one or more operations, including but not limited to: rotating, during the wash event, an accessory gearbox and a transfer gearbox drivingly connected to one or more shafts of the gas turbine engine , the accessory gearbox and the transfer gearbox fluidly connected to a lubrication system having a lubrication reservoir; actuating a solenoid of a solenoid valve from a closed position that prevents lubricant from the lubrication reservoir from flowing to the accessory gearbox and the transfer gearbox to an open position that allows the lubricant to flow from the lubrication reservoir to the accessory gearbox and the transfer gearbox by providing an electrical current from a power source; and cleaning the gas turbine engine with the wash system during the wash event

The memory device(s) 606 can further store data 610 that can be accessed by the processor(s) 604. For example, the data 610 can include sensor data (such as engine parameters), model data, logic data, etc., as described herein. The data 610 can include one or more table(s), function(s), algorithm(s), model(s), equation(s), etc. according to example embodiments of the present disclosure.

The one or more computing device(s) 602 can also include a communication interface 612 used to communicate, for example, with the other components of the gas turbine engine, such as the flow meters, the power source, or other components. The communication interface 612 can include any suitable components for interfacing with one or more network(s), including for example, transmitters, receivers, ports, controllers, antennas, or other suitable components.

Further aspects are provided by the subject matter of the following clauses:

A system for reducing wear during a wash event of a gas turbine engine, the system comprising: an accessory gearbox; a transfer gearbox drivingly and fluidly coupled to the accessory gearbox; and a lubrication system fluidly coupled to the accessory gearbox and the transfer gearbox, the lubrication system comprising: a lubricant reservoir fluidly connected to the transfer gearbox and the accessory gearbox; and a solenoid valve in fluid communication with the lubricant reservoir, the solenoid valve selectively actuatable upon providing an electrical current from a power source between an open position that allows lubricant to flow from the lubricant reservoir to the accessory gearbox and the transfer gearbox and a closed position that prevents the lubricant to flow from the lubricant reservoir to the accessory gearbox and the transfer gearbox.

The system as in any preceding clause, wherein the power source is a wash system power source included in a wash system for performing the wash event on the gas turbine engine.

The system as in any preceding clause, wherein the power source is an engine power source.

The system as in any preceding clause, wherein the wash event is performed using a wash system having a wash controller, wherein the gas turbine engine further comprises an engine controller in operable communication with the wash controller, and wherein the engine controller comprises memory and one or more processors, the memory storing instructions that when executed by the one or more processors cause the system to perform operations including: receiving, with the engine controller, a signal indicative that the wash event has started; and providing the electrical current from an engine power source to the solenoid valve in response to receiving the signal indicative that the wash event has started.

The system as in any preceding clause, wherein the operations further include: receiving, with the engine controller, data indicative of an amount of lubricant supplied to the accessory gearbox and the transfer gearbox from a flow meter in fluid communication with the lubrication system; determining, with the engine controller, that the data indicative of the amount of lubricant supplied to the accessory gearbox and the transfer gearbox has exceeded a predetermined threshold; and actuating the solenoid valve to the closed position by ceasing the electrical current from the power source in response to determining that the data indicative of the amount of lubricant supplied to the accessory gearbox and the transfer gearbox has exceeded the predetermined threshold.

The system as in any preceding clause, wherein the lubrication system comprises: a supply circuit that supplies lubricant from the lubricant reservoir to the accessory gearbox and the transfer gearbox; and a return circuit that returns lubricant from the accessory gearbox and the transfer gearbox to the lubricant reservoir, wherein the solenoid valve is disposed in fluid communication on the supply circuit.

The system as in any preceding clause, wherein the lubrication system includes a lube and scavenge system, wherein the supply circuit includes an inlet supply line extending from the lubricant reservoir to the lube and scavenge system, and wherein the solenoid valve is disposed in fluid communication on the inlet supply line.

The system as in any preceding clause, wherein the solenoid valve is an integrated non-return solenoid valve comprising: a valve body defining a passage partitioned into an inlet zone and an outlet zone by a blocking wall; a solenoid assembly disposed in the passage, the solenoid assembly having a solenoid piston, a solenoid, and a mechanical spring, the solenoid piston being mechanically loaded against the blocking wall in closed position and is movable to a open position when: a pressure within the inlet zone exceeds a mechanical spring force of the mechanical spring; or upon providing an electrical current from a power source to the solenoid.

The system as in any preceding clause, wherein the solenoid valve is an integrated valve comprising: a non-return valve defining a primary passage partitioned into a primary inlet zone and a primary outlet zone by a primary blocking wall, the non-return valve including a non-return piston that is mechanically loaded against the blocking wall in a non-return closed position and is movable to a non-return open position when a pressure within the primary inlet zone exceeds a mechanical spring force; and the solenoid valve defining a bypass passage partitioned into a bypass inlet zone and a bypass outlet zone by a bypass blocking wall, the solenoid valve including a solenoid piston that is loaded against the bypass blocking wall with a solenoid in a solenoid closed position, the solenoid valve selectively actuatable to a solenoid open position upon receipt of an electrical current from a power source.

The system as in any preceding clause, wherein the bypass inlet zone fluidly coupled to the primary inlet zone via a first bypass aperture and the bypass outlet zone fluidly coupled to the primary outlet zone via a second bypass aperture.

The system as in any preceding clause, further comprising a flow meter disposed in the bypass outlet zone.

A method for reducing wear during a wash event of a gas turbine engine with a wash system, the method comprising: rotating, during the wash event, an accessory gearbox and a transfer gearbox drivingly connected to one or more shafts of the gas turbine engine , the accessory gearbox and the transfer gearbox fluidly connected to a lubrication system having a lubrication reservoir; actuating a solenoid of a solenoid valve from a closed position that prevents lubricant from the lubrication reservoir from flowing to the accessory gearbox and the transfer gearbox to an open position that allows the lubricant to flow from the lubrication reservoir to the accessory gearbox and the transfer gearbox by providing an electrical current from a power source; and cleaning the gas turbine engine with the wash system during the wash event.

The method as in any preceding clause, wherein the wash system includes a wash controller, wherein the gas turbine engine further comprises an engine controller in operable communication with the wash controller and the engine controller, and wherein the method comprises: receiving, with the engine controller, a signal indicative that the wash event has started; and providing the electrical current from an engine power source to the solenoid in response to receiving the signal indicative that the wash event has started.

The method as in any preceding clause, wherein method further comprises: receiving, with the engine controller, data indicative of an amount of lubricant supplied to the accessory gearbox and the transfer gearbox from a flow meter in fluid communication with the lubrication system; determining, with the engine controller, that the data indicative of the amount of lubricant supplied to the accessory gearbox and the transfer gearbox has exceeded a predetermined threshold; and actuating the solenoid to the closed position by ceasing the electrical current from the power source in response to determining that the data indicative of the amount of lubricant supplied to the accessory gearbox and the transfer gearbox has exceeded the predetermined threshold.

The method as in any preceding clause, wherein the method further comprises: receiving, with the engine controller, data indicative of an amount of lubricant supplied to the accessory gearbox and the transfer gearbox from a flow meter in fluid communication with the lubrication system; determining, after or during a predetermined period, that insufficient lubricant is transferred to the accessory gearbox and the transfer gearbox based on the data indicative of the amount of lubricant supplied to the accessory gearbox and the transfer gearbox; and ceasing rotating the accessory gearbox and the transfer gearbox.

The method as in any preceding clause, wherein cleaning the gas turbine engine comprise expelling cleaning fluid onto one or more components of the gas turbine engine while the one or more shafts of the gas turbine engine is rotated and the solenoid is in an open position.

The method as in any preceding clause, wherein the accessory gearbox and the transfer gearbox are drivingly connected to the one or more shafts, and wherein rotating the accessory gearbox and the transfer gearbox comprises: rotating, over the wash event, the one or more shafts of the gas turbine engine at between about 10 revolutions per minute (RPM) and about 400 RPM for a duration of the wash event.

The method as in any preceding clause, wherein the solenoid valve is an integrated non-return solenoid valve.

An integrated valve comprising: a non-return valve defining a primary passage partitioned into a primary inlet zone and a primary outlet zone by primary blocking wall, the non-return valve including a non-return piston that is mechanically loaded against the blocking wall in a non-return closed position and is movable to a non-return open position when a pressure within the primary inlet zone exceeds a mechanical spring force; and the solenoid valve defining a bypass passage partitioned into a bypass inlet zone and a bypass outlet zone by a bypass blocking wall, the solenoid valve including a solenoid piston that is loaded against the bypass blocking wall with a solenoid in a solenoid closed position, the solenoid valve selectively actuatable to a solenoid open position upon receipt of an electrical current from a power source.

The integrated non-return solenoid valve as in any preceding clause, wherein the bypass inlet zone fluidly coupled to the primary inlet zone via a first bypass aperture and the bypass outlet zone fluidly coupled to the primary outlet zone via a second bypass aperture.

The integrated valve as in any preceding clause, further comprising a flow meter disposed in the bypass outlet zone.

An integrated non-return solenoid valve comprising: a valve body defining a passage partitioned into an inlet zone and an outlet zone by a blocking wall; a solenoid assembly disposed in the passage, the solenoid assembly having a solenoid piston, a solenoid, and a mechanical spring, the solenoid piston being mechanically loaded against the blocking wall in closed position and is movable to a open position when: a pressure within the inlet zone exceeds a mechanical spring force of the mechanical spring; or upon providing an electrical current from a power source to the solenoid.

The integrated non-return solenoid valve as in any preceding clause, further comprising a flow meter disposed in the outlet zone of the passage.

The integrated non-return solenoid valve as in any preceding clause, further comprising a back wall connected to the solenoid assembly.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A system (200) for reducing wear during a wash event of a gas turbine engine (10), the system comprising:
an accessory gearbox (45);
a transfer gearbox (46) drivingly and fluidly coupled to the accessory gearbox (45); and
a lubrication system (100) fluidly coupled to the accessory gearbox (45) and the transfer gearbox (46), the lubrication system (100) comprising:
a lubricant reservoir (102) fluidly connected to the transfer gearbox (46) and the accessory gearbox (45); and
a solenoid valve (140) in fluid communication with the lubricant reservoir (102), the solenoid valve (140) selectively actuatable upon providing an electrical current (101) from a power source (88, 91) between an open position that allows lubricant (104) to flow from the lubricant reservoir (102) to the accessory gearbox (45) and the transfer gearbox (46) and a closed position that prevents the lubricant (104) to flow from the lubricant reservoir (102) to the accessory gearbox (45) and the transfer gearbox (46).

2. The system as in claim 1, wherein the power source (88, 91) is a wash system power source (88) included in a wash system (80) for performing the wash event on the gas turbine engine (10).

3. The system as in claim 1, wherein the power source (88, 91) is an engine power source (91).

4. The system as in any one of the preceding claims, wherein the wash event is performed using a wash system (80) having a wash controller (96), wherein the gas turbine engine (10) further comprises an engine controller (90) in operable communication with the wash controller (96), and wherein the engine controller (90) comprises memory and one or more processors, the memory storing instructions that when executed by the one or more processors cause the system (200) to perform operations including:
receiving, with the engine controller (90), a signal indicative that the wash event has started; and
providing the electrical current (101) from an engine power source (91) to the solenoid valve (140) in response to receiving the signal indicative that the wash event has started.

5. The system as in claim 4, wherein the operations further include:
receiving, with the engine controller (90), data indicative of an amount of lubricant (104) supplied to the accessory gearbox (45) and the transfer gearbox (46) from a flow meter (180) in fluid communication with the lubrication system (100);
determining, with the engine controller (90), that the data indicative of the amount of lubricant (104) supplied to the accessory gearbox (45) and the transfer gearbox (46) has exceeded a predetermined threshold; and
actuating the solenoid valve (140) to the closed position by ceasing the electrical current (101) from the power source in response to determining that the data indicative of the amount of lubricant (104) supplied to the accessory gearbox (45) and the transfer gearbox (46) has exceeded the predetermined threshold.

6. The system as in any one of the preceding claims, wherein the lubrication system (100) comprises:
a supply circuit (106) that supplies lubricant (104) from the lubricant (104) reservoir to the accessory gearbox (45) and the transfer gearbox (46); and
a return circuit (108) that returns lubricant (104) from the accessory gearbox (45) and the transfer gearbox (46) to the lubricant (104) reservoir, wherein the solenoid valve (140) is disposed in fluid communication on the supply circuit (106).

7. The system as in claim 6, wherein the lubrication system (100) includes a lube and scavenge system (110), wherein the supply circuit (106) includes an inlet supply line (138) extending from the lubricant reservoir (102) to the lube and scavenge system (110), and wherein the solenoid valve (140) is disposed in fluid communication on the inlet supply line (138).

8. The system as in any one of the preceding claims, wherein the solenoid valve (140) is an integrated non-return solenoid valve (300) comprising:
a valve body (301) defining a passage (302) partitioned into an inlet zone (303) and an outlet zone (305) by a blocking wall (304);
a solenoid assembly (308) disposed in the passage (302), the solenoid assembly (308) having a solenoid piston (310), a solenoid (312), and a mechanical spring (316), the solenoid piston (310) being mechanically loaded against the blocking wall (304) in closed position and is movable to a open position when:
a pressure within the inlet zone (303) exceeds a mechanical spring force of the mechanical spring (316); or
upon providing an electrical current (101) from a power source (318) to the solenoid (312).

9. The system as in any one of claims 1-7, wherein the solenoid valve (140) is an integrated valve (400) comprising:
a non-return valve (404) defining a primary passage (408) partitioned into a primary inlet zone (410) and a primary outlet zone (412) by a primary blocking wall (414), the non-return valve (404) including a non-return piston (418) that is mechanically loaded against the blocking wall (414) in a non-return closed position and is movable to a non-return open position when a pressure within the primary inlet zone (410) exceeds a mechanical spring force; and
the solenoid valve (406) defining a bypass passage (424) partitioned into a bypass inlet zone (426) and a bypass outlet zone (428) by a bypass blocking wall (430), the solenoid valve (406) including a solenoid piston (434) that is loaded against the bypass blocking wall (420) with a solenoid (436) in a solenoid closed position, the solenoid valve (406) selectively actuatable to a solenoid open position upon receipt of an electrical current (101) from a power source (438).

10. The system as in claim 9, wherein the bypass inlet zone (426) fluidly coupled to the primary inlet zone (410) via a first bypass aperture (448) and the bypass outlet zone (428) fluidly coupled to the primary outlet zone (412) via a second bypass aperture (450).

11. The system as in any one of claims 9-10, further comprising a flow meter (444) disposed in the bypass outlet zone (428).

12. A method for reducing wear during a wash event of a gas turbine engine (10) with a wash system (80), the method comprising:
rotating, during the wash event, an accessory gearbox (45) and a transfer gearbox (46) drivingly connected to one or more shafts of the gas turbine engine (10), the accessory gearbox (45) and the transfer gearbox (46) fluidly connected to a lubrication system (100) having a lubrication reservoir (102);
actuating a solenoid of a solenoid valve (140) from a closed position that prevents lubricant (104) from the lubrication reservoir (102) from flowing to the accessory gearbox (45) and the transfer gearbox (46) to an open position that allows the lubricant (104) to flow from the lubrication reservoir (102) to the accessory gearbox (45) and the transfer gearbox (46) by providing an electrical current (101) from a power source; and
cleaning the gas turbine engine (10) with the wash system (80) during the wash event.

13. The method as in claim 12, wherein the wash system (80) includes a wash controller (96), wherein the gas turbine engine (10) further comprises an engine controller (90) in operable communication with the wash controller (96) and the engine controller (90), and wherein the method comprises:
receiving, with the engine controller (90), a signal indicative that the wash event has started; and
providing the electrical current (101) from an engine power source (91) to the solenoid in response to receiving the signal indicative that the wash event has started.

14. The method as in claim 13, wherein method further comprises:
receiving, with the engine controller (90), data indicative of an amount of lubricant (104) supplied to the accessory gearbox (45) and the transfer gearbox (46) from a flow meter (180) in fluid communication with the lubrication system (100);
determining, with the engine controller (90), that the data indicative of the amount of lubricant (104) supplied to the accessory gearbox (45) and the transfer gearbox (46) has exceeded a predetermined threshold; and
actuating the solenoid to the closed position by ceasing the electrical current (101) from the power source in response to determining that the data indicative of the amount of lubricant (104) supplied to the accessory gearbox (45) and the transfer gearbox (46) has exceeded the predetermined threshold.

15. An integrated valve (140) comprising:
a non-return valve (404) defining a primary passage (408) partitioned into a primary inlet zone (410) and a primary outlet zone (412) by primary blocking wall (414), the non-return valve (404) including a non-return piston (418) that is mechanically loaded against the blocking wall (414) in a non-return closed position and is movable to a non-return open position when a pressure within the primary inlet zone (410) exceeds a mechanical spring force; and
the solenoid valve (406) defining a bypass passage (424) partitioned into a bypass inlet zone (426) and a bypass outlet zone (428) by a bypass blocking wall (430), the solenoid valve (406) including a solenoid piston (434) that is loaded against the bypass blocking wall (420) with a solenoid (436) in a solenoid closed position, the solenoid valve (406) selectively actuatable to a solenoid open position upon receipt of an electrical current (101) from a power source (438).
